# FASCICULE DE BREVET EUROPEEN

(11) **EP 4 485 894 B1**
(45) Date de publication et mention de la délivrance du brevet: **30.07.2025**
(21) Numéro de dépôt: 24184434.9
(22) Date de dépôt: 25.06.2024
(51) Int. Cl.: H04L 47/28, H04L 47/10, H04W 28/02

(54) **PROCÉDÉ DE TRANSMISSION EN MODE POUSSÉ, DISPOSITIF ET SUPPORT D'ENREGISTREMENT ASSOCIÉS**
VERFAHREN ZUR ÜBERTRAGUNG IM HOCHMODUS, VORRICHTUNG UND SPEICHERMEDIUM DAFÜR
PUSH MODE TRANSMISSION METHOD, DEVICE AND STORAGE MEDIUM

(30) Priorité: 28.06.2023 FR 2306791
(43) Date de publication de la demande: 01.01.2025
(73) Titulaire: SAGEMCOM ENERGY & TELECOM SAS, 92270 Bois-Colombes (FR)
(72) Inventeur: TEBOULLE, Henri, 92270 Bois-Colombes (FR); ROTER, Ziv, 92270 Bois-Colombes (FR)
(74) Mandataire: Novagraaf Technologies

(56) Documents cités:
- EP-A1- 3 866 400
- WO-A1-2018/161207
- US-A1- 2018 146 040

## Description

### Domaine technique

Sont décrits un procédé de transmission en mode poussé de données, un dispositif de mise en oeuvre du procédé et un support d'enregistrement associés, pouvant être utilisés, de façon non limitative, dans le cadre d'une transmission de données collectées de façon récurrente.

### Arrière-plan technique

Dans de nombreuses applications, des dispositifs accumulent des données de façon périodique ou non-périodique nécessitant une collecte, par un dispositif client récepteur, des données accumulées par un dispositif serveur producteur. Tel est par exemple le cas de compteurs de nature diverse, tels que les compteurs électriques, de gaz, d'eau ou encore d'énergie thermique. La quantité de données produites par un tel dispositif pendant un intervalle de temps donné n'est pas toujours prévisible. Un dispositif peut générer des données périodiques, par exemple une valeur mesurée de façon répétée par le compteur sur une période donnée. Les données sont accumulées en attendant leur transmission au dispositif client collecteur.

La communication entre le serveur et le client peut se faire sur un réseau dont les conditions de transmission peuvent varier. Des compteurs, comme des compteurs électriques, peuvent par exemple être équipés d'une interface de réseau cellulaire de type 2G à 5G, sujet à interférences et dont la charge peut varier. Effectuer une transmission dans des conditions défavorables a des conséquences néfastes : les trames envoyées peuvent le cas échéant ne pas être reçues correctement et il peut être nécessaire d'effectuer une ou plusieurs tentatives pour renvoyer certaines trames. Ceci contribue non seulement à une éventuelle saturation du réseau, mais aussi à une surconsommation de données par le dispositif serveur. Or, selon le type de réseau et plus particulièrement dans le cas de réseaux cellulaires, le serveur peut être soumis à une limite de données à transmettre, par exemple par rapport à un contrat d'abonnement particulier. Un exemple de procédé de transmission de données, mise en œuvre par un dispositif émetteur, permettant de transmettre des données en mode poussé vers un dispositif récepteur en tenant en compte la qualité de signal de l'environnement radio fréquence, est décrit dans le document WO2018/161207A1.

Il existe un besoin pour un procédé de transmission efficace prenant en compte ces aspects.

### Résumé

Un ou plusieurs modes de réalisation concernent un procédé de transmission de données en mode poussé vers un dispositif récepteur mis en œuvre par un dispositif émetteur dans un réseau de communication, le dispositif émetteur comprenant une mémoire comportant du code logiciel et un processeur qui, quand il exécute le code logiciel, conduit le dispositif émetteur à mettre en œuvre le procédé, le procédé comprenant :
(a) l'obtention d'une valeur d'un indicateur représentative de la qualité des conditions de transmission entre le dispositif émetteur et le dispositif récepteur dans le réseau de communication;
(b) si la valeur indique une qualité des conditions de transmission supérieure à un premier seuil de qualité, la transmission d'une trame comportant les données à transmettre au dispositif récepteur,
(c) et dans le cas contraire, si une durée de temps restante pour effectuer la transmission des données est inférieure à un seuil temporel; la transmission des données au dispositif récepteur,
(d) et si la durée de temps restante est supérieure au seuil temporel, la mise en œuvre d'une temporisation avant une réitération des étapes (a) à (c).

Ainsi, le dispositif émetteur est en mesure d'attendre une amélioration des conditions de transmission s'il est jugé qu'elles ne sont pas suffisamment bonnes à un moment donné. Toutefois, il est pris en compte que la transmission doit s'effectuer dans un intervalle de temps donné et la possibilité d'attendre de meilleures conditions est soumise à une évaluation du temps restant pour effectuer la transmission. Le nombre d'échecs de transmission est ainsi diminué en moyenne.

Selon un ou plusieurs modes de réalisation, l'indicateur de qualité est un niveau de signal reçu du dispositif récepteur. Ce type d'indicateur peut être facilement obtenu par le dispositif émetteur pour différents types de réseau de communication, notamment cellulaires, qui mettent à disposition les outils de mesure.

Selon un ou plusieurs modes de réalisation, le seuil temporel est fonction de la valeur de l'indicateur de qualité, le seuil temporel croissant avec une qualité croissante.

Ainsi, il est possible de tenir compte de l'urgence croissante de devoir transmettre au fur et à mesure que l'on se rapproche de la fin d'un intervalle de transmission.

Selon un ou plusieurs modes de réalisation, une transmission suite à la détermination que la durée de temps restante pour effectuer la transmission des données est inférieure à un seuil temporel est effectuée selon un mode de transmission dont la robustesse dépend de la valeur de l'indicateur, le niveau de robustesse étant augmenté quand la qualité des conditions de transmission baisse.

Ainsi, on augmente les chances de succès de la transmission des données lorsque la qualité des conditions de transmission n'est pas au-dessus d'un seuil souhaité.

Selon un ou plusieurs modes de réalisation, le procédé comprend la répartition des données à transmettre sur un nombre de trames qui augmente avec le niveau de robustesse.

L'augmentation de la robustesse peut être faite aux dépens de la quantité de données transmises, mais de manière graduelle.

Selon un ou plusieurs modes de réalisation, la durée de la temporisation est fixe et choisie suffisamment longue pour permettre un éventuel changement des conditions de transmission.

Le choix de la durée de temporisation peut dépendre de la nature du réseau et de la rapidité des changements des conditions de transmission typiques pour ce réseau.

Selon un ou plusieurs modes de réalisation, le procédé comprend, préalablement à la mise en œuvre des étapes (a) à (d), la détermination des seuils de qualité en fonction de valeurs de l'indicateur de qualité obtenues par le dispositif émetteur dans le passé.

Ainsi, les seuils de qualité sont spécifiques à chaque dispositif émetteur, ce qui est notamment utile quand le dispositif émetteur est fixe et placé à un endroit où les conditions de communication avec un dispositif client ne sont pas les conditions optimales théoriques.

Un ou plusieurs modes de réalisation concernent un produit programme d'ordinateur qui, lorsque le programme est exécuté par un processeur d'un dispositif, conduisent le dispositif à mettre en œuvre d'au moins un des procédés décrits.

Un ou plusieurs modes de réalisation concernent un support d'enregistrement lisible par un dispositif muni d'un processeur, ledit support comprenant des instructions qui, lorsque le programme est exécuté par un processeur d'un dispositif, conduisent le dispositif à mettre en oeuvre d'au moins un des procédés décrits.

Un ou plusieurs modes de réalisation concernent un dispositif de communication comprenant des moyens adaptés à la mise en oeuvre d'au moins un des procédés décrits.

### Brève description des figures

D'autres caractéristiques et avantages apparaitront au cours de la lecture de la description détaillée qui va suivre pour la compréhension de laquelle on se reportera aux dessins annexés parmi lesquels :
[Fig.1] - la figure 1 est un diagramme bloc d'un système comprenant un dispositif serveur et un dispositif client selon un ou plusieurs modes de réalisation ;
[Fig. 2] - la figure 2 est un algorigramme d'un procédé de poussée de données selon un ou plusieurs exemples de réalisation ;
[Fig. 3] - la figure 3 est un algorigramme d'un procédé de poussée de données selon un ou plusieurs exemples de réalisation.

### Description détaillée

Dans la description qui va suivre, des éléments identiques, similaires ou analogues seront désignés par les mêmes chiffres de référence.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

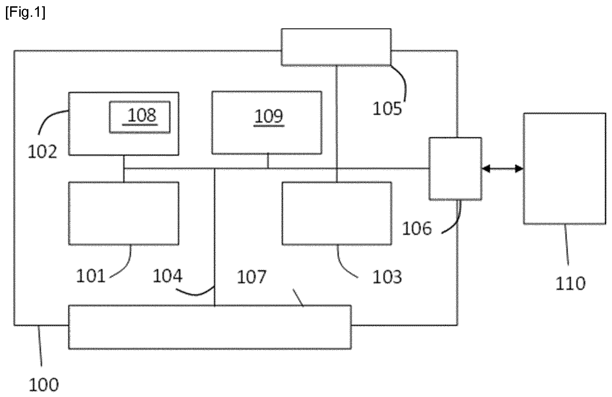

La figure 1 est un diagramme bloc d'un réseau de communication comprenant un dispositif 100 et un dispositif 110 aptes à communiquer à travers le réseau de façon bidirectionnelle. Le dispositif 100 est un dispositif qui stocke des données accumulées ou accumule lui-même des données, données dont au moins certaines sont à transmettre au dispositif 110. On appellera par la suite le dispositif 100 'serveur' et le dispositif 110 'client'. Le serveur 100 comporte un processeur 101, une mémoire 102, une source de données 103, une interface utilisateur 105, une interface de communication 106 configurée pour communiquer de façon bidirectionnelle avec le client 110, un afficheur 107 adapté pour l'affichage de données à un utilisateur du serveur 100, ainsi qu'une mémoire de travail 109. Les différentes composantes du serveur 100 sont connectées à travers un bus de communication 104. La mémoire 102 comporte du code logiciel 108. La mémoire 109 est utilisée pour stocker et gérer les données à transmettre. Lorsque le processeur exécute le code logiciel 108, il conduit le serveur à mettre en œuvre un procédé selon un ou plusieurs exemples de réalisation. Des données à transmettre proviennent par exemple de la source de données 103.

Selon un ou plusieurs exemples de réalisation, le serveur 100 est un compteur métrologique d'une grandeur physique (typiquement une mesure d'électricité, d'eau, de gaz, d'énergie thermique...) tandis que le client 110 est un dispositif collectant les données de différents serveurs pour le compte de l'opérateur du réseau de distribution. La source de données 103 est par exemple l'organe métrologique proprement dit du compteur, organe qui produit une valeur de la grandeur comptée. L'organe métrologique est par exemple en charge de mesurer et d'enregistrer une grandeur physique absolue (intensité d'un courant, pression d'un gaz) ou cumulative (énergie électrique ou volume d'un gaz qui a transité). Les données peuvent être obtenues de façon périodique ou apériodique ou comprendre une combinaison de données obtenues de façon périodique et apériodique. Le réseau de communication est par exemple un média radio d'un des types 2G/3G/4G/LTE NB-loT/LTE Cat-M1/LoRA ou autre.

Le DLMS ou 'Spécification de Messages Langage de Dispositif' ('Device Language Message Specification' en langue anglaise) comprend une série de standards développés et maintenus par l'Association des Utilisateurs DLMS ('DLMS UA') et standardisant les échanges de données de compteurs électriques ou autres. Le DLMS UA maintient notamment le 'Livre Bleu' COSEM (pour Modèle Sémantique Complet pour la Gestion de l'Energie ou 'Comprehensive Semantic Model for Energy Management' en langue anglaise). En particulier, le document 'DLMS UA 1000-1', version 15, partie 2, version 1.0 du 21 décembre 2021 décrit des éléments utilisés dans la poussée de données ('push' en langue anglaise) de la part d'un serveur vers un client. Le document introduit un mécanisme permettant, à chaque déclenchement périodique de l'envoi par poussée, de sélectionner une certaine quantité de données enregistrées à transmettre.

Le serveur 100 et le client 110 de la figure 1 peuvent, à titre d'exemple non limitatif, être compatibles avec le standard DLMS, mais la référence à ce standard est faite essentiellement pour illustrer plus clairement un exemple de réalisation concret, sans que cela ne limite la généralité de l'exposé. Une personne du métier pourra adapter les enseignements de la présente description à d'autres contextes que le DLMS.

Selon un ou plusieurs modes de réalisation, une transmission est effectuée à l'initiative du dispositif serveur. Selon l'implémentation envisagée, différents mécanismes peuvent être mis en oeuvre pour permettre au dispositif serveur d'initier une transmission. Par exemple, un mode de transmission par poussée ('push' en langue anglaise) initié par le serveur peut être mis en œuvre. Selon certains modes de réalisation, le serveur peut également demander au client de lui transmettre une requête en réponse à laquelle le serveur peut effectuer une transmission de données - on parle alors de requête déclenchée par une trame en mode poussé ('push triggered by pull' en langue anglaise).

A titre d'exemple, dans le contexte du DLMS, une transmission en mode poussé est soumise à une ou plusieurs contraintes parmi lesquelles :
(a) Une planification périodique de la transmission avec un intervalle de temps dont le début et la longueur sont imposées pour effectuer la transmission.
(b) Une temporisation aléatoire en début de période de transmission.
(c) En cas de transmission non réussie, une période entre deux essais fixe ou de durée allant en augmentant.

Dans le contexte du DLMS, un serveur détermine lui-même de façon indépendante un moment aléatoire pour communiquer. Il n'y a pas de coordination entre le ou les serveurs et le client pour éviter le chevauchement des communications, il est fait confiance au hasard statistique.

Selon un ou plusieurs exemples de réalisation, une évaluation des conditions de transmission est effectuée avant transmission. Si les conditions sont estimées suffisamment bonnes (e.g. un indicateur de qualité est situé au-delà d'un seuil), la transmission est effectuée. Cependant si les conditions sont jugées insuffisantes, le serveur va dans un premier temps attendre une amélioration de ces conditions. Par exemple, le serveur initie une temporisation avant d'effectuer une nouvelle évaluation des conditions de transmission. Une ou plusieurs boucles de temporisation peuvent être effectuées. A titre d'exemple, la qualité du signal reçu du client par le serveur est estimée. Ainsi, la décision du serveur de transmettre tient compte des conditions réseau.

Selon un ou plusieurs exemples de réalisation, plusieurs seuils sont mis en œuvre dans la décision de transmettre ou de temporiser. Par exemple, si l'on considère deux seuils, un seuil haut au-delà duquel les conditions réseau sont considérées bonnes ou très bonnes et un seul bas en-dessous duquel les conditions sont considérées mauvaises ou très mauvaises peuvent être définis. En prévoyant plusieurs seuils, il est possible de nuancer l'ajustement du niveau de robustesse de la transmission.

L'indicateur de qualité des conditions réseau peut varier selon le type de réseau utilisé. Pour un réseau cellulaire 2G on pourra employer l'indicateur de puissance reçue ('Received Signal Strength Indicator' ou 'RSSI' en langue anglaise). Pour un réseau 4G, LTE Cat-NB ou LTE Cat-M, on pourra utiliser la puissance d'un signal de référence reçu ('Reference Signal Received Power' ou 'RSRP' en langue anglaise), ou encore la qualité du signal de référence reçu ('Reference Signal Received Quality' ou 'RSRQ' en langue anglaise), représentative du ratio signal/bruit. Le serveur peut également effectuer un 'PING', consistant à déclencher l'envoi d'une trame par le client, ce qui permet au serveur de faire une mesure plus précise. La personne du métier pourra choisir d'autres indicateurs, notamment pour d'autres types de réseau.

Selon un ou plusieurs exemples de réalisation, le ou les seuils de qualité sont fixés par rapport à une valeur de référence. Cette valeur de référence peut être choisie pour être représentative d'un niveau de qualité auquel le serveur peut s'attendre, ce qui permet au serveur de situer les conditions de transmission actuelles sur une échelle de la qualité des conditions de transmission.

Selon un ou plusieurs exemples de réalisation, la valeur de référence est préprogrammée dans le serveur.

Par exemple, la valeur de référence est une valeur de RSSI ou de RSRP ou RSRQ préprogrammée en fonction de données connues caractérisant le réseau mis en œuvre. Le ou les seuils de qualité peuvent être définis comme pourcentages de ces valeurs de référence. Selon un ou plusieurs exemples de réalisation, différentes valeurs de référence sont intégrées dans un serveur, chaque valeur de référence correspondant à un indicateur donné.

Selon un ou plusieurs exemples de réalisation, la valeur de référence est déterminée par apprentissage sur base de mesures effectuées préalablement.

Par exemple, le serveur effectue des mesures d'indicateur de qualité de réception de manière périodique sur une période de collecte de données (e.g. toutes les minutes sur une journée). On détermine ensuite le ou les seuils de qualité sur base de ces données historiques.

A titre d'exemple illustratif, un seuil haut peut être défini pour que 25% des mesures soient supérieures ou égales à ce seuil haut, et un seuil bas peut être défini pour que 25% des mesures soient inférieures ou égales à ce seuil bas. Cela revient à traiter les données en utilisant des centiles.

Ainsi, le ou les seuils sont fonction de l'environnement effectif du serveur et peuvent, selon les implémentations, être actualisés en cas de besoin ou périodiquement, par exemple à chaque période de collecte. Chaque serveur dispose ainsi de seuils qui lui sont propres.

Selon un ou plusieurs exemples réalisation, le serveur dispose d'une valeur de référence préprogrammée, utilisée jusqu'à ce qu'une valeur de référence déterminée par apprentissage sur base de données historiques puisse être utilisée à la place.

Selon un ou plusieurs modes de réalisation, le serveur doit transmettre des données dans un intervalle de temps d'une durée déterminée. Suite à chaque évaluation des conditions de transmission, le temps restant dans l'intervalle de transmission pour effectuer une transmission est évalué. Plus on se rapproche de la fin de cet intervalle, plus le serveur va, selon les exemples de réalisation, soit (a) réduire son exigence concernant la qualité des conditions de transmission, soit (b) effectuer une transmission dans un mode comparativement plus robuste, soit combiner (a) et (b).

Il est à noter qu'au moins un essai de transmission sera effectué avant la fin de l'intervalle de temps. Selon un ou plusieurs exemples de réalisation, si aucun essai effectué lors de l'intervalle ne donne lieu à une transmission réussie, la méthode est réitérée à un autre moment de la période.

Selon un ou plusieurs exemples de réalisation, la réduction de l'exigence concernant les conditions de transmission peut par exemple consister à introduire un seuil de qualité plus bas que le seuil initial. Selon d'autres exemples de réalisation, plusieurs seuils dont chacun est plus bas que le précédent sont mis en œuvre, comme par exemple le seuil haut et le seuil bas mentionnés précédemment.

Selon un ou plusieurs exemples de réalisation, la robustesse de la transmission est augmentée en augmentant le nombre de trames pour transmettre une certaine quantité de données. Les trames sont ainsi plus courtes et moins exposées aux conséquences de conditions de transmission plus difficiles. Selon certains exemples de réalisation, plusieurs niveaux de robustesse sont prévus, avec un nombre de trames allant en augmentant avec le niveau de robustesse. Selon certains exemples de réalisation, la robustesse de la transmission est augmentée en réduisant la quantité des données à transmettre, ce qui limite aussi la taille de la trame. Par exemple, seule une partie des données est envoyée, le restant n'étant pas transmis. Ou encore, les données sont traitées de façon à prendre moins de place, quitte à en diminuer la précision, par exemple en moyennant plusieurs valeurs à transmettre.

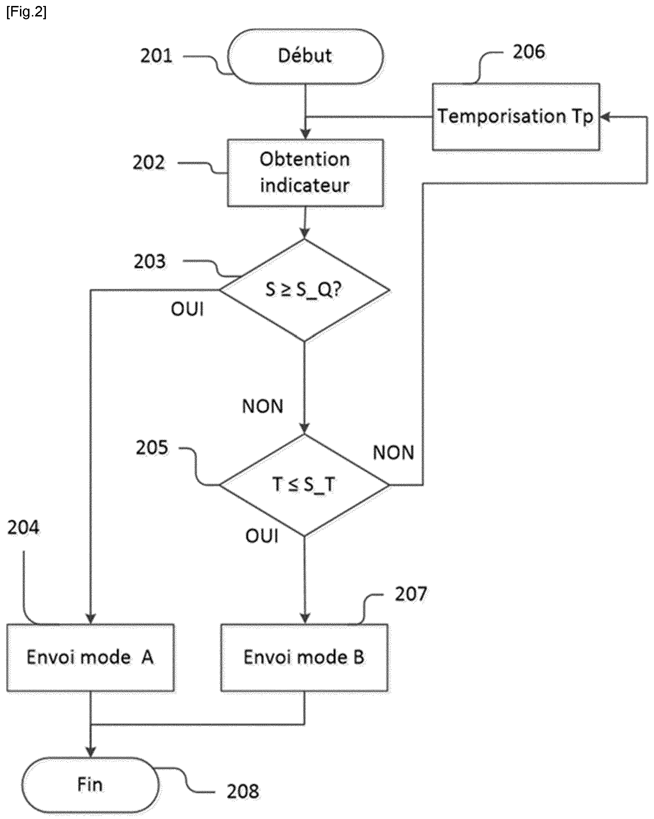

La figure 2 est un algorigramme d'une méthode détaillée selon un premier exemple de réalisation, mettant en œuvre un seul seuil de qualité.

Il est défini :
- Un seuil de qualité S_Q de l'indicateur au-dessus duquel les conditions réseau sont jugées bonnes.
- Un intervalle de transmission de durée SLA.

La méthode illustrée par la figure 2 débute en 201. Les données à transmettre sont par exemple des données collectées par le serveur pendant un intervalle de temps donné, par exemple une journée. A titre illustratif, l'intervalle de transmission attribuée au serveur peut par exemple être d'une durée de quelques heures, de périodicité journalière.

Une valeur S de l'indicateur de qualité est obtenue en 202. Cette valeur est représentative de la qualité actuelle des conditions de transmission entre le serveur et le client. La valeur d'indicateur est utilisée dans le processus décisionnel concernant la transmission ou non à un moment donné. Un test est effectué (203) pour déterminer si le seuil de qualité S_Q est atteint ou dépassé. Si c'est le cas, la transmission d'une trame en mode poussé est effectuée (204). Cette transmission est faite selon un premier mode ('mode A'), qui est le mode de transmission par défaut, c'est-à-dire sans mesures particulières pour améliorer la robustesse de la transmission, mesures qui seraient prises au détriment, par exemple, de la bande passante. Selon un mode de réalisation, ce premier mode consiste par exemple à ne pas limiter la quantité de données utiles transmises dans la trame, par rapport à une limite maximale autorisée par le protocole de communication applicable. Si le seuil n'est pas atteint, le serveur vérifie le temps restant T dans l'intervalle de transmission. Si ce temps T est inférieur à un seuil temporel S_T, alors un second mode de transmission ('mode B') est mis en œuvre en 207 pour envoyer les données. Le second mode est plus robuste que le premier mode, le but étant d'améliorer la probabilité que les données seront correctement reçues par le client, pour limiter le nombre de trames devant être renvoyées. Par exemple, les données utiles à transmettre sont réparties sur plusieurs trames, dont la longueur individuelle est plus courte qu'une trame du premier mode. Dans un contexte expérimental particulier associé au DLMS, il a par exemple été trouvé qu'utiliser trois trames donnait de bons résultats. Ainsi, lorsque l'on se situe sous un certain temps T restant, il est décidé qu'il n'est plus possible d'attendre une amélioration des conditions réseau et une transmission est initiée dans un mode de transmission plus robuste.

Si le temps restant T est supérieur au seuil temporel S_T, il est supposé que le serveur peut attendre de meilleures conditions de transmission. Cette attente est illustrée par la temporisation Tp (206). La méthode reboucle alors avec une nouvelle mesure d'indicateur. La durée de la temporisation dépend du contexte. Elle est choisie par exemple pour être assez longue pour permettre aux conditions de transmission de changer. Elle représente une fraction de la durée SLA de l'intervalle de transmission. Dans le cas d'un réseau cellulaire, elle est par exemple à titre purement illustratif d'une dizaine de minutes pour une durée de l'intervalle de transmission de deux heures.

Selon une première variante de réalisation du premier exemple, la durée de temporisation est fixe. Selon une seconde variante, la durée de temporisation est variable.

Le seuil temporel peut être déterminé de différentes manières. Il peut être fixe ou variable. Selon un exemple de réalisation, il est pris comme une fraction de la durée SLA de l'intervalle de transmission, par exemple 25% de cette durée. La personne du métier pourra choisir un seuil temporel en fonction d'un contexte spécifique.

La transmission prend fin en 208, après envoi selon le premier ou le second mode.

Dans le cadre du DLMS, en cas de réception réussie d'une trame transmise par le serveur, le client produit un accusé de réception adéquat destiné au serveur. Ce dernier sait alors que la transmission s'est effectuée correctement. Si aucune réponse n'est reçue dans le certain délai ou qu'un message d'erreur est reçu du client, le serveur conclut que la transmission ne s'est pas correctement effectuée et effectue un nouvel essai sur base de la méthode décrite. Un nombre maximum d'essais peut être fixé.

Le tableau 1 résume la méthode de la figure 2.

**[Tableau 1]**

| **Indicateur mesuré S** | **S ≥ Seuil de qualité (S_Q)** | **S < Seuil de qualité (S_Q)** |
|---|---|---|
| **T ≥ S_T** | Envoi de trame | Temporisation avant nouvelle mesure de l'indicateur |
| **T < S_T** | Envoi de trame | Envoi en trois trames |

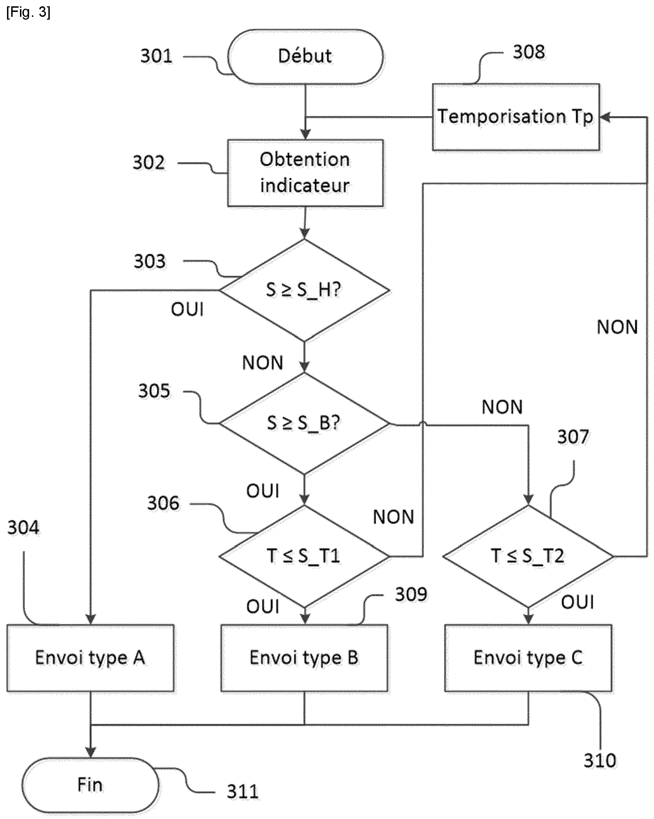

La figure 3 est un algorigramme d'une méthode détaillée selon un second exemple de réalisation, mettant en œuvre deux seuils de qualité. Dans ce qui suit, on mettra en avant principalement les différences avec le premier exemple de réalisation. Il est défini un seuil de qualité haut S_H et un seul de qualité bas S_B de l'indicateur.

La méthode illustrée par la figure 3 débute en 301. Une valeur S de l'indicateur de qualité est obtenue en 302. Un test est effectué en 303 pour déterminer si la valeur de l'indicateur atteint ou dépasse le seuil haut S_H. Si c'est le cas, la transmission d'une trame en mode poussé est effectuée (304). Cette transmission est faite selon le premier mode ('mode A'), qui est le mode de transmission par défaut, comme pour l'exemple illustré par la figure 2. Si le seuil haut S_H n'est pas atteint, le serveur vérifie si l'indicateur est supérieur ou égal au seuil bas, c'est-à-dire dans la zone intermédiaire entre le seuil haut et le seuil bas (en 305). Si c'est le cas, le temps restant T dans l'intervalle de transmission est vérifié (en 306) pour déterminer si l'on peut attendre de meilleures conditions de transmission, auquel cas, une temporisation Tp est initiée en 308 avant une nouvelle évaluation de l'indicateur. Pour vérifier s'il reste assez de temps, le temps T est par exemple comparé à un premier seuil de temps, S_T1. A titre illustratif, ce temps S_T1 est fixé à 50% de la durée de l'intervalle de transmission. S'il est jugé qu'il ne reste pas assez de temps pour attendre de meilleures conditions, une transmission selon un troisième mode (mode C) est effectuée en 309.

Selon l'implémentation choisie, le troisième mode est soit pris identique au premier mode (mode A, sans précautions supplémentaires concernant la robustesse) ou identique au second mode (mode B, avec robustesse accrue) déjà mentionné.

Si l'indicateur est par contre en-dessous du seuil bas S_B (test négatif en 305), alors le temps T restant est comparé en 307 à un second seuil de temps, S_T2. Ce second seuil de temps S_T2 est pris inférieur au premier seuil de temps S_T1. Si le temps restant T est inférieur au second seuil, une transmission selon le second mode (mode B) est effectuée en 310. S'il reste cependant plus de temps, la temporisation Tp en 308 est relancée avant une nouvelle mesure d'indicateur. A titre illustratif, S_T2 est pris par exemple égal à 25% de la durée de l'intervalle de transmission. La méthode prend fin en 311 après une transmission selon des modes mentionnés.

Le tableau 2 résume la méthode de la figure 3 dans le cas où le mode B est identique au mode A.

**[Tableau 2]**

| **Indicateur mesuré S** | **S ≥ Seuil haut (S_H)** | **Seuil bas (S_B) ≤ S < Seuil haut (S_H)** | **S < Seuil bas (S_B)** |
|---|---|---|---|
| **T ≥ S_T1** | Envoi de trame | Temporisation avant nouvelle | Temporisation avant nouvelle |
| | | mesure de l'indicateur | mesure de l'indicateur |
| **S_T2 ≤ T < S_T1** | Envoi de trame | Envoi de trame | Temporisation avant nouvelle mesure de l'indicateur |
| **T < S_T2** | Envoi de trame | Envoi de trame | Envoi en trois trames |

Selon d'autres exemples de réalisation, des seuils intermédiaires de qualité supplémentaires sont introduits entre les seuils de qualité haut et bas, ainsi que des seuils temporels intermédiaires respectifs. Le nombre de trames utilisées pour une transmission sera fonction de la position de la valeur S mesurée de l'indicateur de qualité par rapport aux différents seuils de qualité. Plus la tranche entre deux seuils dans laquelle la valeur se trouvera indiquera une qualité basse, plus le nombre de trames sera augmenté et plus la robustesse de la transmission sera augmentée.

Selon une variante de réalisation applicable à l'ensemble des exemples de réalisation, les seuils temporels, les seuils de qualité et/ou la durée de la temporisation sont configurables.

Dans ce qui précède, divers avantages ont été décrits. Un mode de réalisation spécifique peut présenter un ou plusieurs de ces avantages, mais pas forcément tous les avantages. Certains modes de réalisation peuvent présenter un ou plusieurs avantages non décrits et/ou ne pas présenter d'avantages décrits.

### SIGNES DE REFERENCE

100 - Dispositif serveur
101 - Processeur
102 - Mémoire
103 - Compteur
104 - Bus de communication
105 - Interface utilisateur
106 - Interface de communication bidirectionnelle
107 - Affichage
108 - Code logiciel
109 - Mémoire de travail
110 - Dispositif client

## Revendications

1. Procédé de transmission de données en mode poussé vers un dispositif récepteur (110) mis en œuvre par un dispositif émetteur (100) dans un réseau de communication, le dispositif émetteur comprenant une mémoire (102) comportant du code logiciel (108) et un processeur (103) qui, quand il exécute le code logiciel, conduit le dispositif émetteur à mettre en œuvre le procédé, le procédé comprenant :
a. l'obtention (202, 302) d'une valeur d'un indicateur (S) représentative de la qualité des conditions de transmission entre le dispositif émetteur et le dispositif récepteur dans le réseau de communication;
b. si la valeur indique une qualité des conditions de transmission supérieure à un premier seuil de qualité (S_Q, S_H) , la transmission (204, 304) d'une trame comportant les données à transmettre au dispositif récepteur,
c. et dans le cas contraire, si une durée de temps (T) restante pour effectuer la transmission des données est inférieure à un seuil temporel (S_T, S_T1, S_T2) ; la transmission (207, 309, 310) des données au dispositif récepteur,
d. et si la durée de temps (T) restante est supérieure au seuil temporel (S_T, S_T1, S_T2), la mise en œuvre d'une temporisation (206, 308) avant une réitération des étapes a à c.

2. Procédé selon la revendication 1, dans lequel l'indicateur de qualité est un niveau de signal reçu du dispositif récepteur.

3. Procédé selon l'une des revendications 1 ou 2, le seuil temporel (S_T1, S_T2) étant fonction de la valeur de l'indicateur de qualité, le seuil temporel (S_T1, S_T2) croissant avec une qualité croissante.

4. Procédé selon l'une des revendications 1 à 3, dans lequel une transmission suite à la détermination que la durée de temps (T) restante pour effectuer la transmission des données est inférieure à un seuil temporel (S_T, S_T1, S_T2) est effectuée selon un mode de transmission dont la robustesse dépend de la valeur de l'indicateur, le niveau de robustesse étant augmenté quand la qualité des conditions de transmission baisse.

5. Procédé selon la revendication 4, comprenant la répartition des données à transmettre sur un nombre de trames qui augmente avec le niveau de robustesse.

6. Procédé selon l'une des revendications 1 à 5, dans lequel la durée de la temporisation (206, 308) est fixe et choisie suffisamment longue pour permettre un éventuel changement des conditions de transmission.

7. Procédé selon l'une des revendications 1 à 6, comprenant, préalablement à la mise en œuvre des étapes a à d, la détermination des seuils de qualité en fonction de valeurs de l'indicateur de qualité obtenues par le dispositif émetteur dans le passé.

8. Support d'enregistrement lisible par un dispositif muni d'un processeur, ledit support comprenant des instructions qui, lorsque le programme est exécuté par un processeur d'un dispositif, conduisent le dispositif à mettre en œuvre le procédé selon l'une des revendications 1 à 7.

9. Dispositif émetteur (100) comprenant des moyens adaptés à la mise en œuvre du procédé selon l'une des revendications 1 à 7.

## Patentansprüche

1. Verfahren zum Übertragen von Daten in einem Push-Modus an eine Empfangsvorrichtung (110), das durch eine Sendevorrichtung (100) in einem Kommunikationsnetzwerk implementiert wird, die Sendevorrichtung umfassend einen Speicher (102), der Softwarecode (108) aufweist, und einen Prozessor (103), der, wenn er den Softwarecode ausführt, die Sendevorrichtung veranlasst, das Verfahren zu implementieren, das Verfahren umfassend:
a. Erhalten (202, 302) eines Werts einer Angabe (S), die die Qualität der Übertragungsbedingungen zwischen der Sendevorrichtung und der Empfangsvorrichtung in dem Kommunikationsnetzwerk darstellt;
b. falls der Wert eine Qualität der Übertragungsbedingungen angibt, die größer als ein erster Qualitätsschwellenwert (S_Q, S_H) ist, Übertragen (204, 304) eines Rahmens, der die zu übertragenden Daten umfasst, an die Empfangsvorrichtung,
c. und im umgekehrten Fall, falls eine verbleibende Zeitdauer (T) zum Durchführen der Übertragung der Daten kleiner als ein Zeitschwellenwert (S_T, S_T1, S_T2) ist; Übertragen (207, 309, 310) der Daten an die Empfangsvorrichtung,
d. und falls die verbleibende Zeitdauer (T) größer als der Zeitschwellenwert (S_T, S_T1, S_T2) ist, Implementieren einer Verzögerung (206, 308) vor einem Wiederholen der Schritte a bis c.

2. Verfahren nach Anspruch 1, wobei die Qualitätsangabe ein Signalpegel ist, der an der Empfangsvorrichtung empfangen wird.

3. Verfahren nach einem der Ansprüche 1 oder 2, wobei der Zeitschwellenwert (S_T1, S_T2) eine Funktion des Werts der Qualitätsangabe ist, wobei der Zeitschwellenwert (S_T1, S_T2) mit zunehmender Qualität zunimmt.

4. Verfahren nach einem der Ansprüche 1 bis 3, wobei eine Übertragung nach der Bestimmung, dass die verbleibende Zeitdauer (T) zum Durchführen der Übertragung der Daten kleiner als ein Zeitschwellenwert (S_T, S_T1, S_T2) ist, gemäß einem Übertragungsmodus durchgeführt wird, dessen Robustheit von dem Wert der Angabe abhängt, wobei der Grad der Robustheit erhöht wird, wenn die Qualität der Übertragungsbedingungen abnimmt.

5. Verfahren nach Anspruch 4, umfassend das Verteilen der zu übertragenden Daten auf eine Anzahl von Rahmen, die mit dem Grad der Robustheit erhöht wird.

6. Verfahren nach einem der Ansprüche 1 bis 5, wobei die Dauer der Verzögerung (206, 308) fixiert und ausreichend lang zum Zulassen einer möglichen Änderung der Übertragungsbedingungen gewählt ist.

7. Verfahren nach einem der Ansprüche 1 bis 6, umfassend, vor dem Implementieren der Schritte a bis d, die Bestimmung der Qualitätsschwellenwerte in Abhängigkeit von Werten der Qualitätsangabe, die in der Vergangenheit durch die Sendevorrichtung erhalten wurden.

8. Aufzeichnungsmedium, das durch eine Vorrichtung lesbar ist, die mit einem Prozessor versehen ist, das Medium umfassend Anweisungen, die, wenn das Programm durch einen Prozessor einer Vorrichtung ausgeführt wird, die Vorrichtung veranlassen, das Verfahren nach einem der Ansprüche 1 bis 7 zu implementieren.

9. Sendevorrichtung (100), umfassend Mittel, die an das Implementieren des Verfahrens nach einem der Ansprüche 1 bis 7 angepasst sind.

## Claims

1. Method for transmitting data in push mode to a receiver device (110), implemented by a transmitter device (100) in a communication network, the transmitter device comprising a memory (102) having software code (108) and a processor (103) which, when executing the software code, causes the transmitter device to implement the method, the method comprising:
a. obtaining (202, 302) a value of an indicator (S) representative of the quality of the transmission conditions between the transmitter device and the receiver device in the communication network;
b. if the value indicates a quality of the transmission conditions greater than a first quality threshold (S_Q, S_H), transmitting (204, 304) a frame comprising the data to be transmitted to the receiver device,
c. and if not, if a remaining time duration (T) for carrying out the data transmission is less than a time threshold (S_T, S_T1, S_T2), transmitting (207, 309, 310) the data to the receiver device,
d. and if the remaining time duration (T) is greater than the time threshold (S_T, S_T1, S_T2), implementing a time delay (206, 308) before repeating steps a to c.

2. Method according to claim 1, wherein the quality indicator is a signal level received from the receiver device.

3. Method according to either claim 1 or claim 2, the time threshold (S_T1, S_T2) depending on the value of the quality indicator and the time threshold (S_T1, S_T2) increasing with increasing quality.

4. Method according to any of claims 1 to 3, wherein a transmission following the determination that the remaining time duration (T) for carrying out the data transmission is less than a time threshold (S_T, S_T1, S_T2) is carried out according to a transmission mode, the robustness of which depends on the value of the indicator, the robustness level being increased when the quality of the transmission conditions decreases.

5. Method according to claim 4, comprising the distribution of data to be transmitted over a number of frames that increases with the robustness level.

6. Method according to any of claims 1 to 5, wherein the duration of the time delay (206, 308) is fixed and chosen to be long enough to allow for possible change in the transmission conditions.

7. Method according to any of claims 1 to 6, comprising, prior to implementing steps a to d, determining the quality thresholds on the basis of values of the quality indicator obtained by the transmitter device in the past.

8. Storage medium readable by a device provided with a processor, said medium comprising instructions which, when the program is executed by a processor of a device, cause the device to implement the method according to any of claims 1 to 7.

9. Transmitter device (100) comprising means suitable for implementing the method according to any of claims 1 to 7.
